# EUROPÄISCHE PATENTSCHRIFT

(11) **EP 2 168 690 B1**
(45) Veröffentlichungstag und Bekanntmachung des Hinweises auf die Patenterteilung: **07.11.2012**
(21) Anmeldenummer: 08017203.4
(22) Anmeldetag: 30.09.2008
(51) Int. Cl.: B05C 19/04

(54) **Korund Streuer**
Korund distributor
Epandeur de corindon

(43) Veröffentlichungstag der Anmeldung: 31.03.2010
(73) Patentinhaber: Kronoplus Technical AG, 9052 Niederteufen (CH)
(72) Erfinder: Bachmann, Gerhard, 58332 Schwerin (DE)
(74) Vertreter: Heselberger, Johannes

(56) Entgegenhaltungen:
- EP-A- 0 329 154
- WO-A-98/47705
- CH-A- 536 727
- DE-A1- 2 939 828
- DE-A1- 19 817 805
- DE-C- 608 898
- US-A- 2 737 319
- US-A- 4 245 581

## Beschreibung

### 1. Gebiet der Erfindung

Die vorliegende Erfindung betrifft eine Vorrichtung zum Aufstreuen von Partikel, insbesondere auf eine Oberfläche von Holzwerkstoffplatten oder Imprägnaten, sowie ein Verfahren zum Aufstreuen von Partikeln.

### 2. Hintergrund

Aus dem Stand der Technik sind eine Reihe von Verfahren bekannt, um Partikel auf Oberflächen zu streuen. Aus der WO 05/042644 ist beispielsweise eine Streuvorrichtung bekannt, mit der die Oberfläche eines Fußbodenpaneels mit abriebfesten Partikeln bestreut werden kann. Die abriebfesten Partikel bestehen beispielsweise aus Korund- oder Siliciumverbindungen und werden auf das noch feuchte Dekorpapier eines an sich bekannten Laminatpaneels aufgestreut. Nach Aushärten des Dekorpapiers unter Druck und Temperatur entsteht somit eine sehr widerstandsfähige Oberfläche. Die Vorrichtung umfasst zwei Walzen, eine Stahlwalze sowie eine Bürstenwalze, die parallel zu einander angeordnet sind. Die Stahlwalze ist mit kleinen Vertiefungen oder Taschen an ihrer Oberseite versehen und drehbar gelagert. Oberhalb der Stahlwalze befindet sich ein Behälter der die Korundpartikel enthält und diese auf die sich drehende Oberseite der Stahlwalze kontrolliert abgibt. Die abgegebenen Korundpartikel sammeln sich in den Vertiefungen oder Taschen der Stahlwalze und werden durch die Drehung der Walze abgerakelt und weiter transportiert. Die Bürstenwalze ist ebenfalls drehbar gelagert und seitlich parallel neben der Stahlwalze angeordnet, so dass ihre Bürsten die gefüllten Aussparungen oder Taschen an der Oberfläche der Stahlwalze ausbürsten können. Hierdurch fallen die Partikel, die sich in den Aussparungen gesammelt haben herab und auf die unter den Walzen vorbei geführten Laminatpaneele oder Imprägnate u.ä.. Die Vorrichtung umfasst weiter eine Fördereinrichtung mit der unterhalb der Walzen die Paneele oder Imprägnate in definierter Geschwindigkeit vorbeigeführt werden können. Der Begriff "Imprägnate" ist in der Industrie ein gebräuchlicher Begriff, der mit Harz imprägnierte Papiere bezeichnet, wie beispielsweise das oben erwähnte Dekorpapier. Diese Papiere dienen beispielsweise als Bestandteil oder Zwischenprodukt bei der Herstellung von Laminaten.

Obwohl diese Vorrichtung zufriedenstellend arbeitet, bietet sie dennoch Raum für Verbesserungen. Zum Einen ist es wünschenswert die Dosierung der Menge an abgegebenen Partikeln pro Zeiteinheit besser über die Breite steuern zu können. Außerdem kann die Gleichmäßigkeit der Streuung der Partikel auf die Oberfläche weiter verbessert werden. Ein großer Nachteil der vorbenannten Vorrichtung ist weiter, dass durch das Herausbürsten der abriebfesten Partikel von der Oberfläche bzw. aus den Aussparungen in der Stahlwalze dieselbe einem Verschleiß unterworfen ist, da die abriebfesten Partikel wesentlich härter sind als das Stahl der Stahlwalze. Aus diesem Grund müssen die Stahlwalzen nach Stand der Technik regelmäßig, etwa alle sechs Monate bei einem ununterbrochenen Betrieb, gewechselt werden. Hierdurch fallen zum Einen Kosten an, und zum Anderen verschlechtert sich die Qualität der Streuung gegen Ende der Lebenszeit der Stahlwalze.

Die oben beschriebene Vorrichtung dient zur Bestreuung der Oberfläche von Laminatpaneelen oder Imprägnaten und ähnlichem. Laminatpaneele bestehen üblicherweise aus einer vier bis acht Millimeter dicken Trägerplatte aus MDF- oder HDF-Werkstoff, auf dessen Oberseite ein mit einem Dekor bedrucktes und mit einem Harz imprägniertes Papier, ein sogenanntes Dekorpapier, unter Druck und Temperatur aufgebracht wird. An der Unterseite der Trägerplatte ist ein mit Harz imprägniertes Gegenzugpapier eingerichtet, dass einem Verzug der Trägerplatte durch das aufgebrachte Dekorpapier entgegenwirken soll. Auf dieses Dekorpapier muss eine abriebfeste Schicht bestehend aus kleinen Korundpartikeln (die in einer Harzmatrix eingebettet sind), die in einer Harzmatrix eingebettet sind, aufgebracht werden, um der Oberfläche die nötige Haltbarkeit zu verleihen. Ein weiterer Stand der Technik ist in Dokument DE-A-198 17 805 beschrieben.

Ausgehend von diesem Stand der Technik stellt sich die Aufgabe, eine Vorrichtung zum Aufstreuen von Partikeln auf eine Oberfläche bereitzustellen, die die oben genannten Nachteile des Standes der Technik ausräumt bzw. vermindert. Insbesondere stellt sich die Aufgabe eine Vorrichtung bereit zu stellen, die eine gut dosierbare Streuung ermöglicht und einem geringerem Verschleiß unterworfen ist und daher kostengünstiger betrieben werden kann. Insbesondere ist es die Aufgabe der Erfindung einen Vorrichtung zum Aufstreuen von abriebfesten Partikeln auf die Oberfläche von Holzwerkstoffpaneelen, insbesondere von Laminatpaneelen, wie oben beschrieben, bereitzustellen.

Diese und andere Aufgaben, die beim Lesen der folgenden Beschreibung noch genannt werden oder vom Fachmann erkannt werden können, werden mit einer Vorrichtung nach Anspruch 1 sowie einem Verfahren nach Anspruch 13 gelöst.

### 3. Ausführliche Beschreibung der Erfindung

Die erfindungsgemäße Vorrichtung zum Aufstreuen von abriebfesten Partikeln auf eine Oberfläche umfasst die Merkmale von Anspruch 1. In Ausführungsformen der Erfindung werden etwa Korundpartikeln, auf die Oberfläche von Holzwerkstoffpaneelen, Imprägnaten und ähnlichem, insbesondere Laminatpaneelen, aufgestreut und die Vorrichtung umfasst einen Behälter für die zu streuenden Partikel mit zumindest einer Streuöffnung zum Ausgeben von Partikeln sowie ein walzenartiges Verteilelement mit einer gekrümmten Oberfläche. Die Streuöffnung ist oberhalb der gekrümmten Oberfläche des Verteilelements angeordnet und erstreckt sich vorzugsweise parallel zur Längsachse des walzenartigen Verteilelements. Die Länge der Streuöffnung wird vorzugsweise ausgehend von der Größe der zu bestreuenden Oberfläche gewählt, dies gilt ebenso für die Länge des walzenartigen Verteilelements. Soll beispielsweise einen Oberfläche mit einer Breite von zwei Metern bestreut werden, so müssen walzenartiges Verteilelement und Streuöffnung ebenfalls zumindest etwa zwei Meter lang sein. In allen hierin beschriebenen Ausführungsformen ist die Streuöffnung vorzugsweise ein Spalt (Streuspalt).

Außerdem umfasst die Vorrichtung Mittel, mit denen das walzenartige Verteilelement in Längsrichtung in Vibration versetzt werden kann, so dass die Partikel aus der Streuöffnung über die gekrümmte Fläche hinweg nach unten in Richtung der zu bestreuenden Oberfläche fallen. Die Vibration des Verteilelements erfüllt dabei vorzugsweise mehrere Funktionen. Zum Einen sorgt sie für eine gleichmäßige Verteilung bzw. Streuung der Partikel auf die zu bestreuende Oberfläche. Zum Anderen entfällt durch die Vibration die Notwenigkeit das walzenartige Verteilelement zu drehen, sowie die Notwendigkeit einer Bürstenwalze, mit der im Stand der Technik die Partikel von der Oberfläche des Verteilelements gebürstet wurden. Überraschenderweise wurde festgestellt, dass durch die Vibration des Verteilelements kein oder kaum Verschleiß an der Oberfläche des Verteilelements auftritt. Daher können mit der Vorrichtung der Erfindung insbesondere abriebfeste Partikel, wie beispielsweise Korundpartikel besonders gut verarbeitet werden.

Es sollte dem Fachmann klar sein, dass der Behälter für die zu streuenden Partikel weit zu verstehen ist und jegliche Art von Aufbewahrungsmöglichkeit umfasst, mit der zu streuende Partikel im Sinne der Erfindung bereit gestellt werden können. Wesentlich für die Erfindung ist vielmehr die Streuöffnung bzw. der Streuspalt und dessen Ausrichtung zum walzenartigen Verteilelement. Das walzenartige Verteilelement ist vorzugsweise eine Walze, und insbesondere eine Stahlwalze, da derartige Walzen einfach und relativ kostengünstig zu beschaffen sind. Es sollte dem Fachmann jedoch klar sein, das es bei der Erfindung im Wesentlichen auf die wirksame gekrümmte Oberfläche des Verteilelements ankommt, d. h. diejenige Oberfläche die in Berührung mit den zu streuenden Partikeln kommt und für die Streuwirkung der Partikel wirksam ist. Beispielsweise könnte das walzenartige Verteilelement daher auch aus einer Walze bestehen, die in Längsrichtung quasi "durchgeschnitten" ist, d. h. beispielsweise einen halbkreisförmigen, dreiviertelkreisförmigen oder viertelkreisförmigen Querschnitt hat.

Für eine besonders wirksame Streuung haben Untersuchungen des Anmelders ergeben, dass die Krümmungslinie der gekrümmten Oberfläche vorzugsweise ein Kreisbogen sein sollte. Dieser Kreisbogen sollte insbesondere einen Mittelpunktswinkel (auch Zentriwinkel genannt) von zumindest siebzig Grad, bevorzugt zumindest achtzig Grad, noch bevorzugter zumindest etwa neunzig Grad und am meisten bevorzugt zumindest etwa einhundert Grad haben.

Erfindungsgemäß ist die gekrümmte Oberfläche des walzenartigen Verteilelements mit einer Beschichtung versehen. Diese Beschichtung ist ein Gummi, der in bekannter Weise auf die Oberfläche des Verteilelements aufgebracht ist, insbesondere aufvulkanisiert ist. Das Verteilelement ist vorzugsweise in allen hierin beschriebenen Ausführungsformen aus Stahl gefertigt. Der Anmelder hat überraschend festgestellt, dass eine Gummierung der Oberfläche des walzenartigen Verteilelements die Gleichmäßigkeit der Streuung der Partikel im Vergleich zu einer unbehandelten Stahloberfläche verbessert. Außerdem wurde festgestellt, dass die Gummierung erheblich bessere Verschleißeigenschaften im Vergleich zu einer reinen Stahloberfläche aufweist. Dies gilt insbesondere bei der Verwendung von abriebfesten Partikeln, wie beispielsweise Korundpartikel. Dies ist daher überraschend, weil die gummierte Oberfläche natürlicherweise eine erheblich geringere Härte als beispielsweise eine Stahloberfläche hat. Es wird vermutet, dass die Gummierung durch ihre elastische Nachgiebigkeit weniger anfällig gegenüber den scharfen Kanten der zu streuenden Partikel ist als die härtere, jedoch nicht nachgiebige Stahloberfläche.

Wie bereits erwähnt ist die Vorrichtung besonders für die Verarbeitung von abriebbeständigen Partikeln, wie insbesondere Korundpartikeln, geeignet. Die oben beschriebene Gummierung oder Gummibeschichtung sollte vorzugsweise eine Shore-A Härte zwischen 40 und 80 Shore, bevorzugt 50 und 70 Shore und besonders bevorzugt zwischen 55 und 65 Shore aufweisen. Die Shore-Härte ist ein bekannter Werkstoffkennwert für Elastomere und Kunststoffe und in den Normen DIN 53505 und DIN 7868 festgelegt.

Zur Erzeugung der Vibration des walzenartigen Verteilelements sind dem Fachmann verschiedene mechanische Schwingungserzeuger bekannt. Das Verteilelement ist vorzugsweise schwingbar gelagert und wird beispielsweise mit einem Vibrationsmittel oder Schwingungserzeuger in einem Frequenzbereich von 10 bis 250 Hertz, vorzugsweise 20 bis 150 Hertz und am meisten bevorzugt von 30 bis 80 Hertz angeregt. Die Schwingbewegung liegt im Bereich von einigen Zehntelmillimetern, wie etwa 0,1 mm. Es wurde festgestellt, dass diese Frequenzbereiche zu besonders guten Ergebnissen führen. Es sollte dem Fachmann klar sein, dass in allen hierin beschriebenen Ausführungsformen allgemein das walzenartige Verteilelement nicht um seine Längsachse rotiert werden muss, sondern vielmehr nicht rotierbar eingerichtet sein muss.

Die Vorrichtung erlaubt eine besonders gute Einstellung der Mengenabgabe an ausgegebenen Partikeln. Bevorzugt ist in der Vorrichtung der Abstand zwischen dem Streuspalt bzw. der Streuöffnung und der gekrümmten Oberfläche des walzenartigen Verteilelements einstellbar, um die Menge an abgegebenen Partikel variieren zu können. Je größer der Abstand ist, umso mehr Partikel werden pro Zeiteinheit gefördert. Ebenso lässt sich die Menge an geförderten Partikeln durch die Einstellung der Vibration, bzw. der Frequenz beeinflussen. Daher sind die Mittel, um das Verteilelement in Vibration zu versetzen, vorzugsweise regelbar, um je nach Anwendungsfall eine geeignete Frequenz einstellen zu können. Die Vorrichtung ist besonders zur Verarbeitung von Partikeln mit einem Durchmesser von 60 bis 120 µm geeignet und besonders für Partikel mit Korngröße 220 bis 150.

### 4. Beschreibung von bevorzugten Ausführungsformen

Im Folgenden wird eine detaillierte Beschreibung der Figuren gegeben:
Figur 1 ist eine schematische Frontalansicht einer Vorrichtung zum Aufstreuen von Partikeln gemäß der Erfindung;
Figur 2 ist eine schematische Seitenansicht der Vorrichtung von Figur 1 und
Figur 3 ist eine schematische Seitenansicht einer weiteren Ausführungsform der Erfindung.

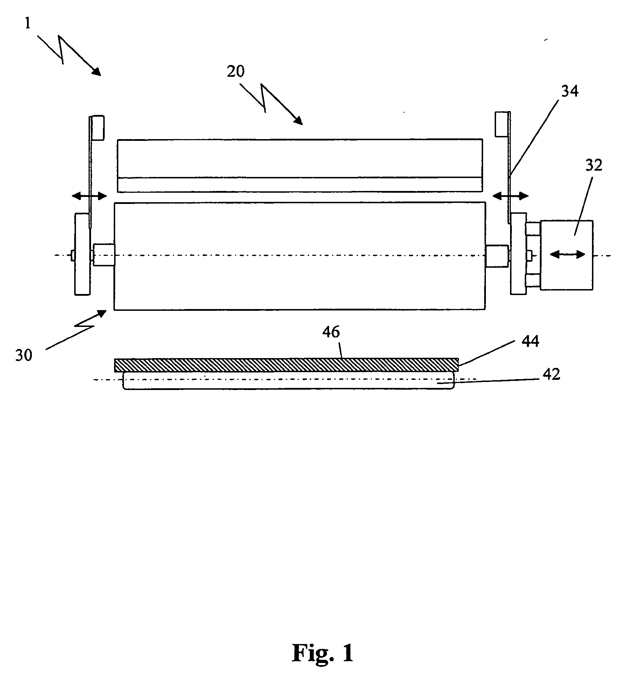

In Figur 1 ist eine Vorrichtung 1 zum Aufstreuen von Partikeln auf eine Oberfläche in schematischer Frontansicht gezeigt. Die Vorrichtung umfasst einen Behälter 20 für die zu streuenden Partikel sowie ein walzenartiges Verteilelement 30, welches unter dem Behälter 20 angeordnet ist. In der Figur rechts neben dem Verteilelement 30 ist ein Mittel 32 eingerichtet, mit dem das Verteilelement 30 in Richtung seiner Längsachse in Vibration bzw. Schwingung versetzt werden kann (angedeutet durch einen Doppelpfeil). Das Mittel 32 ist im abgebildeten Fall ein mechanischer Schwingungsgeber und arbeitet vorzugsweise in einem Frequenzbereich von zehn bis 250 Hertz, besonders bevorzugt von 20 bis 150 Hertz und am meisten bevorzugt von 30 bis 80 Hertz. Das Verteilelement 30 ist über Befestigungselemente 34 schwingbar gelagert, wie es durch die Doppelpfeile angedeutet ist. Unterhalb des Verteilelements ist eine Fördereinrichtung angeordnet, die über Förderwalzen 42 verfügt, mittels denen eine Holzwerkstoffplatte 44 (oder auch ein imprägniertes Papier) unter der Vorrichtung 1 vorbeigeführt werden kann. Die zu streuenden Partikel fallen aus dem Behälter 20 über das Verteilelement 30 auf die Oberfläche 46 der Holzwerkstoffplatten 44 und werden somit auf der Oberfläche 46 durch die Vibrationen des Verteilelements 30 gleichmäßig verteilt.

Die Holzwerkstoffplatte 44 ist, wie in allen hierin beschriebenen Ausführungsformen, vorzugsweise ein Laminatpaneel umfassend eine Trägerplatte aus MDF- oder HDF-Material sowie ein Dekorpapier, welches auf der Oberseite 46 der Holzwerkstoffplatte 44 aufgeklebt ist. Wie eingangs erläutert ist das Dekorpapier mit einem Harz, wie beispielsweise einem Amino-oder Melaminharz, getränkt und zum Zeitpunkt, wenn es unter der Vorrichtung 1 hindurchgeführt wird noch feucht. Die aufgestreuten Partikel sinken zumindest teilweise in die noch feuchte Harzimprägnierung ein und bilden mit dieser nach Austrocknung des Harzes und anschließender Verpressung eine extrem abriebfeste Oberfläche.

Es sollte dem Fachmann jedoch klar sein, das die Erfindung ebenso gut geeignet ist, um nur das imprägnierte Papier zu bestreuen, das dann bspw. auf geeigneten Rollgängen unter der Vorrichtung durchgeführt wird. Mit anderen Worten: die Vorrichtung ist dazu geeignet Imprägnate zu bestreuen, bevor diese bspw. zu Laminaten weiter verarbeitet werden.

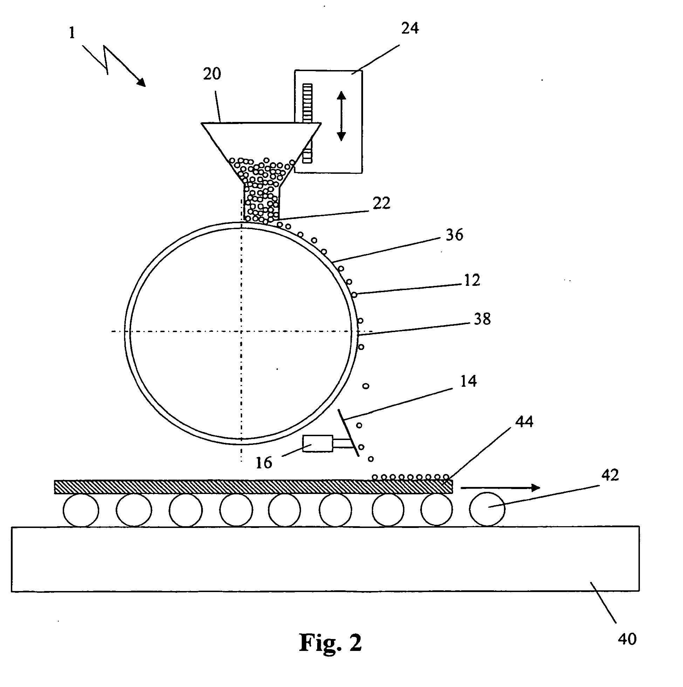

In Figur 2 ist die Vorrichtung 1 in einer Seitenansicht gezeigt. In der Seitenansicht sind die Rollen 42 der Fördereinrichtung gut zu erkennen. Der Pfeil neben der Holzwerkstoffplatte 44 deutet die Bewegungsrichtung der Platte 44 an. In Figur 2 sind auch die Partikel 12 schematisch dargestellt, wie sie aus dem Behälter 20 über eine gekrümmte Oberfläche 36 des Verteilelements 30 herabfallen, bzw. durch die Vibration des Verteilelements 30 herabgefördert werden. Der Behälter 20 weist eine Streuöffnung 22 zum Ausgeben der Partikel 12 auf. Weiter ist der Behälter 20 an einer Vorrichtung 24 eingerichtet, mit der der Behälter 20 vertikal bewegt werden kann. Auf diese Weise kann der Abstand zwischen der Streuöffnung 22 und dem Verteilelement 30 verkleinert und vergrößert werden. Selbstverständlich sind hier auch andere Mittel denkbar, um den Abstand von der Oberfläche des Verteilelements einzustellen. Der Abstand zwischen Streuöffnung und Oberfläche des Verteilelements ist vorzugsweise - wie in allen erfindungsgemäßen Ausführungsformen - derart eingestellt, dass ohne eine Vibration des Verteilelements keine Partikel aus der Streuöffnung heraustreten. Erst durch die Übertragung der Vibrationen von dem Verteilelement auf die Schüttung der Partikel in dem Behälter werden diese quasi aus der Öffnung herausgeschüttelt.

In Figur 2 ist weiter angedeutet, dass die Oberfläche des Verteilelements 30 mit einer Beschichtung 38 versehen ist. Die Beschichtung 38 besteht aus einer aufvulkanisierten Gummierung. Bei der Figur 2 ist weiter ein Prallblech 14 vorgesehen, mit dem der Weg der Partikel 12 beeinflusst werden kann. Das Prallblech 14 ist erfindungsgemäß verstellbar eingerichtet, um so die Streuung der Partikel auf der Oberfläche des Paneels 44 und die Luftströmung beeinflussen zu können. Weiter ist das Prallblech mit einem Schwingungsgeber 16 versehen, mit dem zum Einen die Streuung der Partikel weiter beeinflusst werden kann und zum Anderen ein Anhaften der Partikel 12 auf der Oberfläche des Prallblechs 14 unterbunden werden kann. Alternativ ist es beispielsweise möglich das Prallblech 14 mechanisch mit dem Verteilelement 30 oder dem Mittel 32 zu koppeln, so dass die Schwingungen des Verteilelements bzw. des Mittels 32 auf das Prallblech 14 übertragen werden. In diesem Fall kann auf den separaten Schwingungsgeber 16 verzichtet werden.

Das Verteilelement der Figuren ist vorzugsweise eine Stahlwalze und hat beispielsweise eine Länge zwischen einem und drei Metern und einen Durchmesser zwischen 80 und 300 Millimetern. Die Streuöffnung 22 ist beispielsweise ein Spalt der zwischen einem und drei Metern lang ist und eine Breite von einem bis drei Millimetern hat. Es sollte dem Fachmann daher klar sein, dass die schematischen Darstellungen nicht maßstabsgetreu sind, sondern dass bestimmte Einzelheiten der Klarstellung halber stark vergrößert sind. Dies gilt insbesondere für die Streuöffnung 22 sowie die dargestellten Partikel 12. Die zu streuenden Partikel sind üblicherweise, insbesondere wenn es sich dabei um abriebfeste Partikel, wie etwa Korund-partikel, zur Bestreuung der Oberfläche eines Laminatpaneels handelt, in der Größenordnung von einigen Mikrometern.

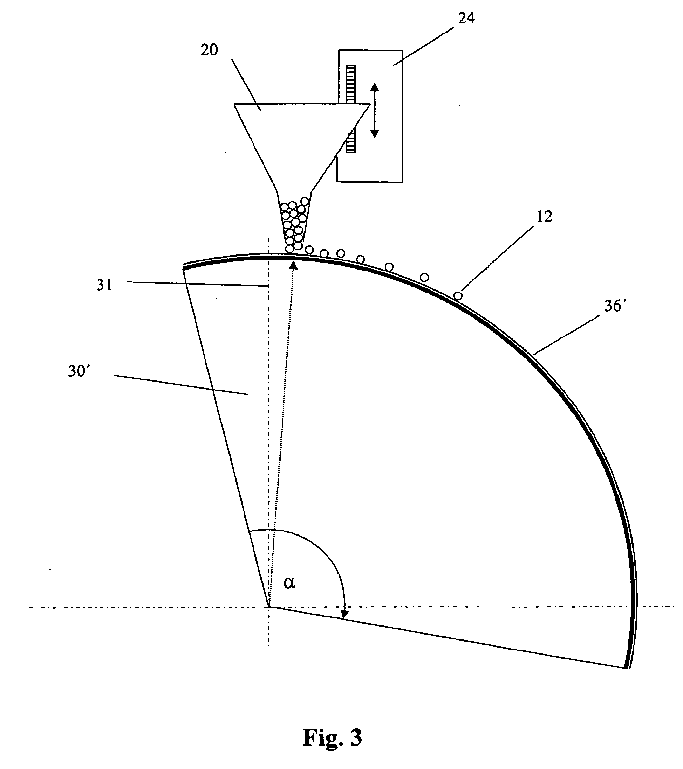

In Figur 3 ist ein alternatives Verteilelement 30' dargestellt. Auch das Verteilelement 30' ist walzenförmig, jedoch weist es keinen runden, sondern einen etwa viertelkreisförmigen Querschnitt auf. Die wirksame gekrümmte Oberfläche 36', d. h. die Oberfläche, die in Kontakt mit den zu streuenden Partikeln 12 ist und für die Verteilung dieser Partikel verantwortlich ist, beschreibt einen Kreisbogen mit einem Mittelpunktswinkel α (Zentriwinkel) von dargestellten ca. 100°. Hierbei muss aber sichergestellt werden, dass durch die unsymmetrische Form keine unkontrollierte Eigenbewegung auftritt. Wie aus Figur 3 weiter gut zu erkennen ist, ist die Streuöffnung von der senkrechten Mittellinie 31 des Verteilelements einige Grad versetzt angeordnet. Auf dies Weise wird sichergestellt, dass die zu verteilenden Partikel 12 im Wesentlichen in der gewünschten Richtung rechts in der Figur herabfallen.

## Patentansprüche

1. Vorrichtung (1) zum Aufstreuen von abriebfesten Partikeln (12) auf eine Oberfläche (46), insbesondere auf eine Oberfläche von Holzwerkstoffpaneelen oder Imprägnaten, umfassend
einen Behälter (20) für die zu streuenden Partikel mit zumindest einer Streuöffnung (22) zum Ausgeben von Partikeln, und
ein walzenartiges Verteilelement (30) mit einer gekrümmten Oberfläche (36), wobei die Streuöffnung über der gekrümmten Oberfläche angeordnet ist,
**dadurch gekennzeichnet, dass** die gekrümmte Oberfläche (36) des walzenartigen Verteilelements (30) gummiert ist und
Mittel (32) vorgesehen sind, mit denen das walzenartige Verteilelement in Längsrichtung in Vibration versetzt werden kann, so dass Partikel (12) aus der Streuöffnung (22) über die gekrümmte Fläche (36) hinweg nach unten in Richtung der zu bestreuenden Oberfläche fallen und das die Vorrichtung (1) zumindest ein derart verstellbar eingerichtetes Prallblech (14) umfasst, dass die Streuung der Partikel auf die Oberfläche und die Luftströmung hierdurch beeinflußbar sind.

2. Vorrichtung nach Anspruch 1, **dadurch gekennzeichnet, dass** die Krümmungslinie der gekrümmten Oberfläche (36) ein Kreisbogen ist und zwar mit einem Mittelpunktswinkel a (Zentriwinkel) von zumindest 70°, bevorzugt zumindest 80° und am meisten bevorzugt zumindest etwa 90°.

3. Vorrichtung nach Anspruch 1 oder 2, **dadurch gekennzeichnet, dass** das walzenartige Verteilelement (30) eine Walze ist und die Streuöffnung (22) ein Streuspalt ist, der parallel zur Längsachse der Walze angeordnet ist.

4. Vorrichtung nach einem der vorhergehenden Ansprüche, **dadurch gekennzeichnet, dass** die Partikel (12) abriebbeständige Partikel umfassen und vorzugsweise Korund-Partikel umfassen.

5. Vorrichtung nach einem der vorhergehenden Ansprüche, **dadurch gekennzeichnet, dass** die Streuöffnung (22) derart ausgebildet ist, so dass Partikel (12) aus der Streuöffnung aufgrund der Schwerkraft nach unten heraus fallen können und dass zwischen Streuöffnung und der gekrümmten Oberfläche (36) des walzenartigen Verteilelements (30) ein Abstand vorgesehen ist, der so klein gewählt ist, dass ohne Vibration des walzenartigen Verteilelements keine Partikel aus der Streuöffnung herausfallen können.

6. Vorrichtung nach einem der vorhergehenden Ansprüche, **dadurch gekennzeichnet, dass** das walzenartige Verteilelement (30) eine Stahlwalze ist mit einer Länge zwischen 1 und 3 Meter und einem Durchmesser zwischen 80 und 300 mm und die Streuöffnung (22) ein Streuspalt ist, der zwischen 1 und 3 Meter lang ist und eine Breite von 1 bis 3 mm hat.

7. Vorrichtung nach einem der vorhergehenden Ansprüche, **dadurch gekennzeichnet, dass** das walzenartige Verteilelement (30) eine Stahlwalze ist und die Streuöffnung (22) ein Streuspalt ist, der parallel zur Längsachse der Walze um 1 bis 30 Winkelgrad von der senkrechten Mittellinie (31) der Stahlwalze versetzt angeordnet ist, vorzugsweise um 3 bis 20 Grad und am meisten bevorzugt um 5 bis 15 Grad.

8. Vorrichtung nach einem der vorhergehenden Ansprüche, **dadurch gekennzeichnet, dass** der Abstand zwischen Streuöffnung (22) und gekrümmter Oberfläche (36) des walzenartigen Verteilelements (30) - vorzugsweise über die gesamte Breite unabhängig - einstellbar ist, um die Menge an abgegebenen Partikeln variieren zu können.

9. Vorrichtung nach einem der vorhergehenden Ansprüche, **dadurch gekennzeichnet, dass** die Mittel (32) zum Vibrieren des walzenartigen Verteilelements in einem Frequenzbereich von 10 bis 250 Hz, vorzugsweise 20 bis 150 Hz und am meisten bevorzugt von 30 bis 80 Hz arbeiten.

10. Vorrichtung nach einem der vorhergehenden Ansprüche, **dadurch gekennzeichnet, dass** das walzenartige Verteilelement (30) nicht um seine Längsachse rotierbar ist.

11. Vorrichtung nach Anspruch 1, **dadurch gekennzeichnet, dass**
weiter Mittel (16; 32) vorgesehen sind, um das Prallblech einer Vibration auszusetzen.

12. Vorrichtung nach Anspruch 1 oder 11 **dadurch gekennzeichnet, dass** das Prallblech (14) mit dem walzenartigen Verteilelement (30) gekoppelt ist, so dass die Vibration von dem walzenartigen Verteilelement auf das Prallblech übertragen werden kann.

13. Verfahren zum Aufstreuen von Partikeln auf eine Oberfläche, insbesondere auf eine Oberfläche von Holzwerkstoffpaneelen und Imprägnaten, umfassend die folgenden Schritte:
• Bereitstellen einer Vorrichtung gemäß einem der Ansprüche 1 bis 12;
• Bereitstellen von abriebfesten Partikeln in dem Behälter;
• Vibrieren des walzenartigen Verteilelements in Längsrichtung, um Partikel aus der Streuöffnung zu fördern, wobei
• das walzenartige Verteilelement (30) nicht um seine Längsachse rotiert wird.

## Claims

1. Device (1) to disperse particles (12) onto a surface (46), in particular onto a surface of wood material panels or impregnates, comprising
a container (20) for the particles to be dispersed with at least one scatter opening (22) to dispend articles, and
a roller like distributing element (30) with a curved surface (36), wherein the scatter opening is arranged above the curved surface, **characterized in that** the curved surface (36) of the roller like distributing element (30) is rubberized and that means (32) are provided, by means of which the roller like distributing element can be brought into vibration in longitudinal direction, such that particles (12) fall out of the scatter opening (22) via the curved surface (36) downwards in the direction of the surface to be sprinkled and **in that** the device (1) comprises at least one baffle plate (14), which is adjustable to influence the scattering of the particles onto the surface and the air current.

2. Device according to claim 1, **characterized in that** the line of curvature of the curved surface (36) is a circular arc and in particular with a central angle α of at least 70°, preferably at least 80° and most preferred at least approximately 90°.

3. Device according to any one of claims 1 or 2, **characterized in that** the roller like distributing element (30) is a roller and the scatter opening (22) is a scatter slot, which is arranged parallel to the longitudinal axis of the roller.

4. Device according to any of the preceding claims, **characterized in that** the particles (12) comprise abrasion resistant particles and preferably corundum particles.

5. Device according to any of the preceding claims, **characterized in that** the scatter opening (22) is formed such that particles (12) can fall out of the scatter opening downwardly due to gravity and that between scatter opening and the curved surface (36) of the roller like distributing element (30) a distance is provided, which is chosen small enough, such that without any vibration of the roller like distributing element, no particles will fall out of the scatter opening.

6. Device according to any of the preceding claims, **characterized in that** the roller like distributing element (30) is a steel roller with a length between 1 and 3 meters and a diameter between 80 and 300 mm and **in that** the scatter opening (22) is a scatter slot, which is between 1 and 13 meters long and has a width of between 1 and 3 mm.

7. Device according to any of the preceding claims, **characterized in that** the roller like distributing element (30) is a steel roller and the scatter opening (22) is a scatter slot, which is arranged parallel to the longitudinal axis of the roller and which is offset by 1 to 30° angular degree from the vertical centre line (31) of the steel roller, preferably 3 to 20° and most preferably 5 to 15°.

8. Device according to any of the preceding claims, **characterized in that** the distance between scatter opening (22) and curved surface (36) of the roller like distributing element (30) is adjustable - preferably over the whole width independently - to vary the amount of dispersed particles.

9. Device according to any of the preceding claims, **characterized in that** the means (32) to bring the roller like distributing element into vibration works in a frequency range of 10 to 250 Hz, preferably 20 to 150 Hz and most preferably of 30 to 80 Hz.

10. Device according to any of the preceding claims, **characterized in that** the roller like distributing element (30) is not rotateable around its longitudinal axis.

11. Device according to claim 1, **characterized in that** further means (16; 32) are provided, to bring the baffle plate into vibration.

12. Device according to any one of claims 1 or 11, **characterized in that** the baffle plate (14) is connected with the roller like distributing element (30), such that the vibration can be transferred from the roller like distributing element to the baffle plate(s).

13. Method to disperse articles on a surface, in particular onto a surface of wood material panels and impregnates, comprising the following steps:
- providing a device according to any one of claims 1 to 12;
- providing of particles in the container;
- vibrating the roller like distributing element in a longitudinal direction, to convey particles out of the scatter opening; whereby
- the roller like distributing element (3) is not rotated around its longitudinal axle.

## Revendications

1. Dispositif (1) d'épandage de particules (12) résistantes à l'abrasion sur une surface (46), en particulier sur une surface de panneaux en matériau à base de bois ou de produits d'imprégnation, comprenant
un récipient (20) pour les particules à épandre, présentant au moins une ouverture d'épandage (22) destinée à distribuer les particules,
et
un élément distributeur (30) en forme de cylindre présentant une surface courbe (36), l'ouverture d'épandage étant disposée au-dessus de la surface courbe, **caractérisé en ce que**
la surface courbe (36) de l'élément distributeur (30) en forme de cylindre est caoutchoutée, et **en ce qu'**il est prévu des moyens (32) permettant de faire vibrer en direction longitudinale l'élément distributeur en forme de cylindre, de telle sorte que des particules (12) tombent hors de l'ouverture d'épandage (22) pardessus la surface courbe vers le bas en direction de la surface à recouvrir, et **en ce que**
le dispositif (1) comprend au moins une chicane (14) aménagée réglable de manière à permettre d'influer sur l'épandage des particules sur la surface (1) et sur l'écoulement d'air.

2. Dispositif selon la revendication 1, **caractérisé en ce que** la ligne de courbure de la surface courbe (36) est un arc de cercle ayant un angle au centre α d'au moins 70°, de préférence d'au moins 80° et de préférence particulière d'au moins 90° environ.

3. Dispositif selon la revendication 1 ou 2, **caractérisé en ce que** l'élément distributeur (30) en forme de cylindre est un cylindre et l'ouverture d'épandage (22) est un intervalle d'épandage qui est disposé parallèlement à l'axe longitudinal du cylindre.

4. Dispositif selon l'une des revendications précédentes, **caractérisé en ce que** les particules (12) comprennent des particules résistantes à l'abrasion et comprennent de préférence des particules de corindon.

5. Dispositif selon l'une des revendications précédentes, **caractérisé en ce que** l'ouverture d'épandage (22) est réalisée de manière à permettre aux particules (12) de tomber par gravité hors de l'ouverture d'épandage vers le bas et à prévoir une distance entre l'ouverture d'épandage et la surface courbe (36) de l'élément distributeur (30) en forme de cylindre, ladite distance étant choisie si petite qu'à l'absence de vibrations de l'élément distributeur en forme de cylindre, aucune particule ne peut tomber hors de l'ouverture d'épandage.

6. Dispositif selon l'une des revendications précédentes, **caractérisé en ce que** l'élément distributeur (30) en forme de cylindre est un cylindre en acier d'une longueur comprise entre 1 et 3 mètres et d'un diamètre compris entre 80 et 300 mm, et l'ouverture d'épandage (22) est un intervalle d'épandage d'une longueur comprise entre 1 et 3 mètres et d'une largeur de 1 à 3 mm.

7. Dispositif selon l'une des revendications précédentes, **caractérisé en ce que** l'élément distributeur (30) en forme de cylindre est un cylindre en acier, et l'ouverture d'épandage (22) est un intervalle d'épandage disposé en décalage de 1 à 30 degrés, de préférence de 3 à 20 degrés et de préférence particulière de 5 à 15 degrés par rapport à la médiane verticale (31) du cylindre en acier, parallèlement à l'axe longitudinal du cylindre.

8. Dispositif selon l'une des revendications précédentes, **caractérisé en ce que** la distance entre l'ouverture d'épandage (22) et la surface courbe (36) de l'élément distributeur (30) en forme de cylindre est réglable - de préférence indépendamment sur toute la largeur - afin de pouvoir faire varier la quantité de particules distribuées.

9. Dispositif selon l'une des revendications précédentes, **caractérisé en ce que** les moyens (32) destinés à faire vibrer l'élément distributeur en forme de cylindre fonctionnent dans une gamme de fréquences de 10 à 250 Hz, de préférence de 20 à 150 Hz et de préférence particulière de 30 à 80 Hz.

10. Dispositif selon l'une des revendications précédentes, **caractérisé en ce que** l'élément distributeur (30) en forme de cylindre n'est pas rotatif autour de son axe longitudinal.

11. Dispositif selon la revendication 1, **caractérisé en ce qu'**il est prévu en outre des moyens (16 ; 32) destinés à faire vibrer la chicane.

12. Dispositif selon la revendication 1 ou 11, **caractérisé en ce que** la chicane (14) est couplée à l'élément distributeur (30) en forme de cylindre de manière à permettre de transmettre la vibration de l'élément distributeur en forme de cylindre à la chicane.

13. Procédé d'épandage de particules sur une surface, en particulier sur une surface de panneaux en matériau à base de bois et de produits d'imprégnation, comprenant les étapes suivantes :
- on fournit un dispositif selon l'une des revendications 1 à 12 ;
- on fournit des particules résistantes à l'abrasion dans ledit récipient ;
- on fait vibrer en direction longitudinale l'élément distributeur en forme de cylindre afin de transporter les particules hors de l'ouverture d'épandage,
- en ne faisant pas tourner l'élément distributeur (30) en forme de cylindre autour de son axe longitudinal.
